# EUROPÄISCHE PATENTSCHRIFT

(11) **EP 0 545 102 B1**
(45) Veröffentlichungstag und Bekanntmachung des Hinweises auf die Patenterteilung: **06.09.1995**
(21) Anmeldenummer: 92119133.4
(22) Anmeldetag: 09.11.1992
(51) Int. Cl.: F16H 3/093

(54) **6-Gang-Wechselgetriebe für Kraftfahrzeuge**
Six speed gearbox for automotive vehicles
Transmission à six vitesses pour véhicules automobiles

(30) Priorität: 05.12.1991 DE 4140031
(43) Veröffentlichungstag der Anmeldung: 09.06.1993
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Luiken, Andreas, W-5000 Köln 60 (DE)
(74) Vertreter: Messulam, Alec Moses

(56) Entgegenhaltungen:
- EP-A- 0 224 407
- EP-A- 0 239 553
- DE-A- 4 116 189
- DE-U- 9 104 201

## Beschreibung

Die Erfindung bezieht sich auf ein 6-Gang-Wechselgetriebe für Kraftfahrzeuge, mit einer die Festräder aufweisenden Eingangswelle und zwei die Losräder aufweisenden Vorgelegewellen, der im Oberbegriff des Patentanspruches 1 erläuterten Art.

Aus der EP-A-0 224 407 sind ein 5-Gang-Wechselgetriebe und ein 6-Gang-Wechselgetriebe etwa der im Oberbegriff des Patentanspruches 1 erläuterten Art bekannt.

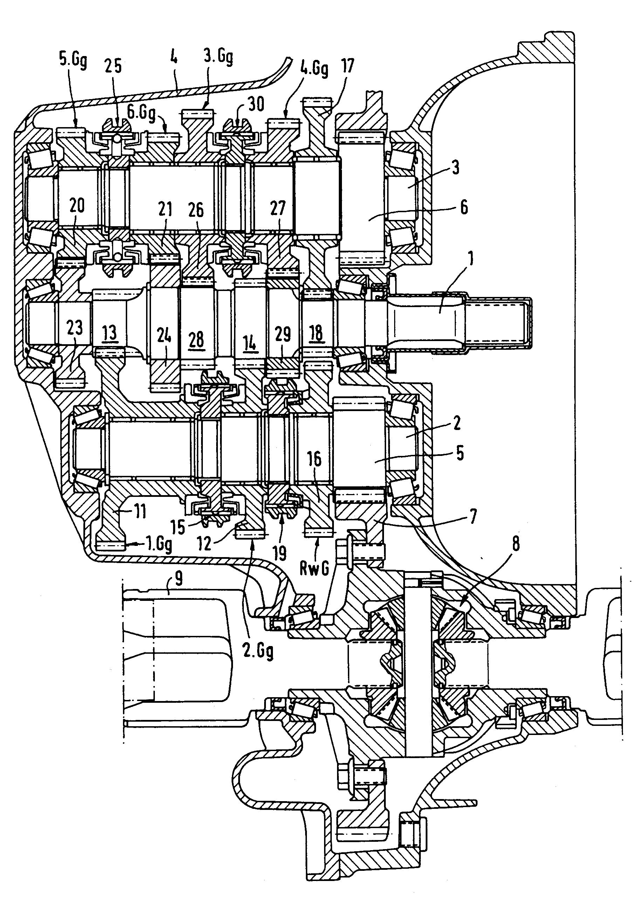

Bei dem in Fig. 1 der oben genannten Schrift gezeigten 5-Gang-Wechselgetriebe und bei dem aus Fig. 4 der oben genannten Schrift bekannten 6-Gang-Wechselgetriebe sind alle Gänge einschließlich des Rückwärtsganges synchronisiert, das Getriebe weist jedoch den Nachteil auf, daß die axial kompakte Bauweise mit dem Nachteil erkauft wird, daß die Übersetzungen des 4. und 5. Ganges voneinander abhängig sind. Eine solche Abhängigkeit ergibt sich durch die in diesen zwei Gängen übereinstimmend benutzten Zahnräder und beschränkt eine mögliche Abstufung der einzelnen Gänge.

Für die Bereitstellung des Rückwärtsganges wird ein loses Zwischenrad benötig, das auf einem freifliegenden Bolzen drehbar gelagert wird, obwohl an sich an der zweiten Vorgelegewelle der entsprechende axiale Platz vorhanden wäre.

Die Aufgabe, der Erfindung ist es, ein 6-Gang-Wechselgetriebe für Kraftfahrzeuge, der im Oberbegriff des Patentanspruches 1 erläuterten Art derart zu verbessern, daß bei axial kompakter Bauweise die Anordnung der Zahnradpaare und der Sychronisiereinrichtungen derart gewählt wird, daß sämtliche sechs Vorwärtsgänge einschließlich des Rückwärtsganges synchronisiert ausgeführt werden können, sämtliche Gangübersetzungen frei wählbar sind und das Getriebe nur die drei Hauptwellen benötigt.

Gemäß der Erfindung wird diese Aufgabe gelöst, indem bei einem 6-Gang-Wechselgetriebe für Kraftfahrzeuge, der im Oberbegriff des Patentanspruches 1 erläuterten Art, die im Kennzeichenteil des Patentanspruches 1 aufgezeigten Merkmale angewendet werden.

Dadurch, daß auf der ersten Vorgelegewelle die Losräder für den 1. und 2. Gang mit ihrer Synchronisiereinrichtung derart im Abstand angeordnet sind, daß auf der Eingangswelle zwischen ihren Festrädern die Festräder für den 6. und 3. Gang angeordnet werden können, dadurch, daß das Losrad des Rückwärtsganges mit seiner einseitigen Synchronisiereinrichtung benachbart dem Abtriebsritzel angeordnet ist und über ein auf der zweiten Vorgelegewelle angeordnetes, loses Zwischenrad in Eingriff mit seinem Festrad auf der Eingangswelle steht und dadurch, daß auf der zweiten Vorgelegewelle die Losräder für den 5. und 6. Gang derart angeordnet sind, daß ihre doppelseitige Synchronisiereinrichtung in der Ebene des Festrades des 1. Ganges liegt und die Losräder für den 3. und 4. Gang derart angeordnet sind, daß ihre doppelseitige Synchronisiereinrichtung in der Ebene des Festrades für den 2. Gang liegt, wird ein Getriebe mit einer Verschachtelung der Zahnradpaare und der für sie benötigten Synchronisiereinrichtungen erreicht, die eine freie Übersetzungsauslegung eines jeden Ganges inkl. Rückwärts-Gang ermöglicht, eine axial kompakte Bauform zuläßt und nur die drei Hauptwellen erfordert.

Weitere vorteilhafte Auslegungsmaßnahmen des erfindungsgemäßen 6-Gang-Wechselgetriebes sind in den Ansprüchen 1 bis 4 aufgezeigt.

Dadurch, daß für die kurz übersetzten Gänge 1., 2. und den Rückwärts-Gang eine kurze Endübersetzung und für die länger übersetzten Gänge 3., 4., 5. und 6. Gang eine längere Endübersetzung gewählt wird, kann eine Drehzahlüberhöhung im Getriebe vermieden werden.

Dadurch, daß die Achsabstände der Vorlegewellen von der Eingangswelle unterschiedlich und unabhängig voneinander gewählt werden können, können die Zahnraddurchmesser optimal ausgelegt werden.

Das erfindungsgemäße 6 Gang-Wechselgetriebe weist den besonderen Vorteil auf, daß es durch seine kompakte Bauform kaum länger als ein herkömmliches 4-Gang-Wechselgetriebe baut.

Das Vermeiden eines losen Zwischenrades für den Rückwärtsgang mit einer getrennten Lagerung an einer gesonderten Welle bringt bei der Montage des Wechselgetriebes noch eine weitere vorteilhafte Vereinfachung mit sich.

Das Getriebegehäuse ist hierbei, wie an sich bekannt, zweiteilig auslegbar, d.h. es wird senkrecht zu den Getriebewellen geteilt ausgeführt.

Die Erfindung wird anhand eines in der beiliegenden Zeichnung gezeigten Ausführungsbeispieles näher erläutert:
Die Figur zeigt einen vertikalen Teilschnitt durch ein 6-Gang-Wechselgetriebe für Kraftfahrzeuge gemäß der Erfindung.

In der Fig. sind nur jeweils die Bauteile mit Bezugszeichen versehen, die für eine Erläuterung der Erfindung erforderlich sind.

Eine Eingangswelle 1 weist die Festräder des Getriebes auf und eine erste Vorgelegewelle 2 und eine zweite Vorgelegewelle 3 weisen die Losräder des Getriebes auf, die mit den entsprechenden Festrädern auf der Eingangswelle 1 in Eingriff stehen. Die Eingangswelle 1 und die beiden Vorgelegewellen 2 und 3 sind in herkömmlicher Weise über entsprechende Lagerungen, z.B. Kegelrollenlager in einem Getriebegehäuse 4 drehbar gelagert.

Die beiden Vorgelegewellen 2 und 3 weisen feste Abtriebsritzel 5 und 6 auf, die beide in Eingriff mit einem Antriebszahnrad 7 eines Differentialgetriebes 8 stehen, daß über Gleichlaufgelenke 9 Frontantriebswellen (nicht gezeigt) antreibt.

Auf der ersten Vorgelegewelle 2 sind die Losräder 11 und 12 für den 1. und 2. Gang mit ihrer doppelseitigen Synchronisiereinrichtung 15 derart in einem Abstand (langer Hülsenabschnitt des Losrades 11) angeordnet, daß auf der Eingangswelle 1 zwischen den Festrädern 13 und 14 für den 1. und 2. Gang die Festräder 24 und 28 für den 6. und 3. Gang angeordnet werden können.

Das Losrad 16 für den Rückwärtsgang ist mit seiner einseitigen Synchronisiereinrichtung 19 benachbart dem Abtriebsritzel 5 angeordnet und steht über sein auf der 2. Vorgelegewelle 3 benachbart dem Abtriebsritzel 6 angeordneten losen Zwischenrad 17 in Eingriff mit seinem Festrad 18 auf der Eingangswelle 1.

Auf der 2. Vorgelegewelle 3 sind die Losräder 20 und 21 für den 5. und 6. Gang derart angeordnet, daß ihre doppelseitige Synchronisiereinrichtung 25 in der Ebene des Festrades 13 des 1. Ganges liegt und ihre Festräder 23 und 24 benachbart dem Festrad 13 für den 1. Gang auf der Eingangswelle 1 liegen.

Die Losräder 26 und 27 für den 3. und 4. Gang sind derart angeordnet, daß ihre doppelseitige Synchronisiereinrichtung 30 in der Ebene des Festrades 14 des 2. Ganges liegt und ihre Festräder 28 und 29 benachbart dem Festrad 14 für den 2. Gang auf der Eingangswelle 1 liegen.

Durch diese Veschachtelung der Zahnradsätze wird erreicht, daß die jeweils einen größeren Außendurchmesser erfordernden Synchronisiereinrichtungen 15, 19, 25 und 30 auf ihren Wellen 2 bzw. 3 in den Ebenen angeordnet werden können, in denen ihnen auf der Eingangswelle 1 die Festräder 13, 28, 14 und 29 mit den geringeren Durchmessern gegenüberliegen.

Durch die Wahl einer kurzen Endübersetzung 5 für die kurz übersetzten Gänge 1., 2. und Rückwärts-Gang und die Wahl einer längeren Endübersetzung 6 für die länger übersetzten Gänge 3., 4., 5. und 6. Gang kann eine den Wirkungsgrad des Getriebes beeinträchtigende Drehzahlüberhöhung, d.h., das durch eine Übersetzung bedingte Antreiben einer Vorgelegewelle ins Schnelle, vermieden werden.

Durch die Möglichkeit, die Achsabstände der beiden Vorgelegewellen von der Eingangswelle unterschiedlich und unabhängig voneinander auszuwählen, können die Zahnraddurchmesser optimal ausgelegt werden.

Durch die kompakte Bauform des erfindungsgemäßen 6-Gang-Wechselgetriebes, die kaum länger baut als ein herkömmliches 4-Gang-Wechselgetriebe, kann der Vorteil eines 6-Gang-Wechselgetriebes auch bei Fahrzeugen mit Frontantrieb im unteren und mittleren Modellbereich zum Einsatz gelangen.

Durch die Anordnung des Rückwärtsgang-Zwischenrades auf der zweiten Vorgelegewelle wird eine wesentliche Vereinfachung der Montage des 6-Gang-Wechselgetriebes erzielt.

Die Anordnung der einzelnen Gangstufen korrespondiert in diesem Beispiel mit einem H-Schalt-Schema bekannter Art, es können jedoch auch andere Schalt-Schemas verwirklicht werden.

Die Anordnung der Gangstufen ist in dem Fall eine andere, das Prinzip des Getriebeaufbaus wird hierbei jedoch beibehalten.

## Patentansprüche

1. 6-Gang-Wechselgetriebe für Kraftfahrzeuge, mit einer die Festräder aufweisenden Eingangswelle (1) und zwei die Losräder aufweisenden Vorgelegewellen (2 und 3), die in einem Getriebegehäuse (4) drehbar gelagert sind und wobei beide Vorgelegewellen (2 und 3) über je ein festes Abtriebsritzel (5 und 6) im Eingriff mit einem Antriebszahnrad (7) eines Differentialgetriebes (8) stehen, das über Gleichlaufgelenke (9) Frontantriebswellen antreibt und wobei alle Gänge einschließlich des Rückwärtsganges synchronisiert sind,
**dadurch gekennzeichnet,** daß
- auf der ersten Vorgelegewelle (2) die Losräder (11 und 12) für den 1. und 2. Gang mit ihrer doppelseitigen Synchronisiereinrichtung (15) derart im Abstand angeordnet sind, daß auf der Eingangswelle (1) zwischen den Festrädern (13 und 14) des 1. und 2. Ganges die Festräder (24 und 28) für den 6. und 3. Gang angeordnet werden können,
- auf der ersten Vorgelegewelle (2) das Losrad (16) des Rückwärtsganges mit seiner einseitigen Synchronisiereinrichtung (19) benachbart dem Abtriebsritzel (5) angeordnet ist und über sein auf der zweiten Vorgelegewelle (3) benachbart dem Abtriebsritzel (6) angeordnetes loses Zwischenrad (17) in Eingriff mit seinem Festrad (18) auf der Eingangswelle (1) steht und
- auf der zweiten Vorgelegewelle (3) die Losräder (20 und 21) für den 5. und 6. Gang derart angeordnet sind, daß ihre doppelseitige Synchronisiereinrichtung (25) in der Ebene des Festrades (13) für den 1. Gang liegt und die Losräder (26 und 27) für den 3. und 4. Gang derart angeordnet sind, daß ihre doppelseitige Synchronisiereinrichtung (30) in der Ebene des Festrades (14) für den 2. Gang liegt.

2. 6-Gang-Wechselgetriebe für Kraftfahrzeuge nach Anspruch 1,
**dadurch gekennzeichnet,** daß
- die kurz übersetzten Gänge (1., 2. und der Rückwärtsgang) über eine kurze Endübersetzung (5) realisiert werden und
- die länger übersetzten Gänge (3., 4., 5. und 6. Gang) über eine längere Endübersetzung (6) realisiert werden.

3. 6-Gang-Wechselgetriebe für Kraftfahrzeuge nach den Ansprüchen 1 und 2,
**dadurch gekennzeichnet,** daß
- die Achsabstände der Vorgelegewellen (2 und 3) von der Eingangswelle (1) unterschiedlich sind.

4. 6-Gang-Wechselgetriebe für Kraftfahrzeuge nach den Ansprüchen 1 bis 3,
**dadurch gekennzeichnet,** daß
- ein H-Schaltschema in üblicher Anordnung unmittelbar realisiert ist.

## Claims

1. A 6-speed change-speed gearbox for automotive vehicles having rotatably mounted in a gearbox housing (4) an input shaft (1) carrying the fixed gearwheels and two layshafts (2 and 3) carrying the loose gearwheels, both layshafts (2 and 3) being in engagement, each by way of a respective output pinion (5 and 6), with a drive gearwheel (7) of a differential (8) which drives front-wheel drive shafts through constant velocity joints (9) and all gears, including reverse gear, being synchronised,
characterised in that
- on the first layshaft (2) the loose gearwheels (11 and 12) for first and second gears, with their double-sided synchronising device (15), are arranged spaced apart so that on the input shaft (1) the fixed gearwheels (24 and 28) for sixth and third gears can be arranged between the fixed gearwheels of first and second gears,
- on the first layshaft (2) the loose gearwheel (16) of reverse gear, with its single-sided synchronising device (19), is arranged adjacent the output pinion (5) and is in engagement with its fixed gearwheel (18) on the input shaft (1) through its loose intermediate gearwheel (17) arranged on the second layshaft (3) adjacent the output pinion (6), and
- on the second layshaft (3) the loose gearwheels (20 and 21) for fifth and sixth gears are arranged so that their double-sided synchronising device (25) lies in the plane of the fixed gearwheel (13) for first gear and the loose gearwheels (26 and 27) for third and fourth gears are arranged so that their double-sided synchronising device (30) is in the plane of the fixed gearwheel (14) for second gear.

2. A 6-speed change-speed gearbox for automotive vehicles according to claim 1,
characterised in that
- the low gears (first, second and reverse gears) are realised through a low (high-ratio) final gear (5), and
- the high gears (third, fourth, fifth and sixth gears) are realized through a higher (lower-ratio) final gear (6).

3. A 6-speed change-speed gearbox for automotive vehicles according to claims 1 and 2,
characterized in that
- the axial spacings of the layshafts (2 and 3) from the input shaft (1) are different.

4. A 6-speed change-speed gearbox for automotive vehicles according to claims 1 to 3,
characterized in that
- an H shift pattern arranged in the usual way is directly realised.

## Revendications

1. Boîte de vitesses à 6 rapports ou vitesses, pour véhicules automobiles, comprenant un arbre d'entrée ou primaire (1), portant les pignons fixes, et deux arbres intermédiaires (2 et 3), portant les pignons baladeurs, qui sont montés rotatifs dans un carter de boîte (4) et dont les deux arbres intermédiaires (2 et 3) sont en prise, chacun par un pignon de sortie fixe (5 et 6), avec une roue dentée d'entraînement (7) d'un différentiel (8) qui, par des joints homocinétiques (9), commande des arbres de roues avant motrices, boîte dont toutes les vitesses et aussi la marche arrière sont synchronisées, caractérisée en ce que
- les pignons baladeurs (11 et 12) pour les 1^{re} et 2^{e} vitesses, ensemble avec leur dispositif de synchronisation bilatéral (15), sont disposés sur le premier arbre intermédiaire (2) à une telle distance l'un de l'autre que les pignons fixes (24 et 28) pour les 6^{e} et 3^{e} vitesses peuvent être placés entre les pignons fixes (13 et 14) des 1^{re} et 2^{e} vitesses sur l'arbre primaire (1),
- le pignon baladeur (16) de la marche arrière, ensemble avec son dispositif de synchronisation unilatéral (19), est agencé sur le premier arbre intermédiaire (2) à proximité du pignon de sortie (5) et est en prise avec le pignon fixe (18) qui lui est coordonné sur l'arbre primaire (1) par un pignon baladeur intermédiaire (17) monté sur le second arbre intermédiaire (3) près du pignon de sortie (6), et
- les pignons baladeurs (20 et 21) pour les 5^{e} et 6^{e} vitesses sont agencés sur le second arbre intermédiaire (3) de manière que leur dispositif de synchronisation bilatéral (25) soit situé dans le plan du pignon fixe (13) pour la 1^{re} vitesse et les pignons baladeurs (26 et 27) pour les 3^{e} et 4^{e} vitesses sont agencés sur le second arbre intermédiaire (3) de manière que leur dispositif de synchronisation bilatéral (30) soit situé dans le plan du pignon fixe (14) pour la 2^{e} vitesse.

2. Boîte à 6 vitesses pour véhicules automobiles selon la revendication 1, caractérisé en ce que
- les vitesses (1, 2 et la marche arrière) à rapport court sont réalisées à l'aide d'un rapport final court (5) et
- les vitesses (3, 4, 5 et 6) à rapport plus long sont réalisées à l'aide d'un rapport final plus long (6).

3. Boîte à 6 vitesses pour véhicules automobiles selon les revendications 1 et 2, caractérisé en ce que
- les entraxes des arbres intermédiaires (2 et 3) et de l'arbre primaire (1) sont différents.

4. Boîte à 6 vitesses pour véhicules automobiles selon les revendications 1 à 3, caractérisé en ce que
- un schéma de sélection en H, selon une disposition usuelle, est réalisé directement sur elle.
